# EUROPEAN PATENT APPLICATION

(11) **EP 4 696 201 A1**
(43) Date of publication of application: **18.02.2026**
(21) Application number: 24789044.5
(22) Date of filing: 11.04.2024
(51) Int. Cl.: A47F 5/00

(54) **ROLLER-TYPE PRODUCT DISPLAY DEVICE**

(30) Priority: 14.04.2023 KR 20230049363
(71) Applicant: Seidae Ind. Co., Ltd., Gimpo-si, Gyeonggi-do 10048 (KR)
(72) Inventor: KO, Jae Sung, Bucheon-si, Gyeonggi-do 14478 (KR); CHAE, Jeng Lok, Incheon 22766 (KR)
(74) Representative: Cohausz & Florack
(86) International application number: PCT/KR2024/004837
(87) International publication number: WO 2024/215102

(57) **Abstract**

A roller-type goods display device according to an embodiment includes a roller stage on which a plurality of unit columns are disposed and a frame rail disposed between the unit columns. The roller stage may include a roller stage body, a roller part where a plurality of rollers are disposed on a first surface formed on one side of the roller stage body, a frame part disposed between the roller parts and formed on a sliding surface arranged parallel to and alternating with the first surface, and a fastening part disposed between the roller part and the frame part. A frame rail is disposed in each frame part, and the frame rail includes a covering area that covers the fastening part.

## Description

### TECHNICAL FIELD

Embodiments of the present disclosure relate to a roller-type goods display device, and more particularly, to a roller-type goods display device that may reduce working time and improve work efficiency for forming a goods display shelf by forming the shelf on a roller stage composed of a plurality of unit columns.

### BACKGROUND OF THE INVENTION

Conventionally, devices for displaying goods installed in retail stores such as supermarkets, convenience stores, or pharmacies simply displayed the goods by placing them on a shelf. However, recently, the demand for goods display devices that allow for easy identification, receiving and releasing, movement, management, and selection of goods on a shelf has been increasing. Such goods display devices are generally designed with a structure that may reduce friction between the bottom surface of the goods displayed on the shelf and the surface of the shelf, allowing the goods to move easily on the shelf.

Conventionally, a display device that allows goods to be moved was configured by fastening rollers to a roller base composed of a single column (one row). When considering the size of a product to be displayed, a movable display device having a width corresponding to the size of the product to be displayed was configured by connecting a plurality of roller bases. Here, in order to connect a plurality of roller bases to which rollers were coupled, a plurality of roller bases were coupled via a plurality of frame rails for connection between the roller bases.

In other words, a movable display device was manufactured by coupling the roller bases, to which rollers were fastened, one by one.

However, this method had the inconvenience of having to couple a plurality of roller bases one row at a time. Furthermore, in the process of manufacturing the movable display device, there was the hassle of having to align the roller bases to couple them. In other words, this acted as a factor that reduces work efficiency for configuring the movable display device.

Moreover, because a plurality of roller bases, each composed of a single column, are connected, there is a problem in that more friction may occur between a product and a frame rail as the product seated on the roller base moves.

Therefore, there is a need for a roller base that may improve work efficiency by reducing the working time for configuring a movable display device, and may minimize friction between the product and the frame rail.
(Patent Document) Korean Patent Application Publication No. 10-2021-0085216 (Published on Jul. 08, 2021)

### DETAILED DESCRIPTION OF THE INVENTION

### PROBLEM TO BE SOLVED

An object of an embodiment is to solve the aforementioned problems and other problems.

An object of an embodiment is to provide a roller-type goods display device that reduces working time and improves work efficiency through a roller stage composed of a plurality of unit columns.

An object of an embodiment is to provide a roller-type goods display device that may minimize friction between displayed goods and a frame rail.

### SOLUTION TO THE PROBLEM

According to one aspect of the present disclosure, a roller-type goods display device may include: a roller stage on which a plurality of unit columns are disposed; and a frame rail disposed between the unit columns.

And, the roller stage may include: a roller stage body; a roller part in which a plurality of rollers are disposed on a first surface formed on one side of the roller stage body; a frame part disposed between the roller parts and formed on a sliding surface that is arranged parallel to and alternating with the first surface; and a fastening part disposed between the roller part and the frame part.

And, the frame rail, which is disposed in each of the frame parts, may include a covering area that covers the fastening part.

The device may further include an end cap disposed at the ends of the roller stage and the frame rail, and the frame rail may include a coupling area that is coupled to the end cap.

In the roller stage, the ends of the unit columns may be arranged in a zigzag pattern.

The sliding surface and the first surface may be disposed on the same plane.

The roller stage may further include a second surface, which is formed on the opposite side of the first surface and the sliding surface, and is disposed on the other side of the roller stage body, and may include a through-hole that passes through the first surface, the second surface, and a part of the roller stage body.

The through-hole may include a first through-hole disposed in the frame part and a second through-hole disposed in the roller part.

A cover member may be further disposed on the second surface, and the cover member may cover one or a plurality of the roller stages.

A separation distance from the second surface to the sliding surface may be disposed to be shorter than a separation distance from the second surface to the first surface.

The fastening part may include: a fastening line disposed along the major axis direction of the unit column; and a fastening groove disposed on a part of the upper surface of the fastening line.

The fastening line may include one side disposed adjacent to the first surface, and the other side disposed adjacent to the sliding surface.

The fastening part may further include an insertion groove disposed on the lower side of the fastening line.

The insertion groove may be disposed on a side surface of the fastening line adjacent to the frame part, and may be disposed to extend inward into the body of the roller stage along a side surface in the longitudinal direction of the sliding surface.

The fastening part may further include a protrusion projecting from a side surface of the fastening line, and the insertion groove may be formed by the sliding surface, a part of the side surface of the fastening line, and the protrusion.

The roller may include: a roller body; and a roller fastening protrusion protruding and extending from an end of the roller body, wherein the roller fastening protrusion may be seated in the fastening groove.

The frame rail may cover the top of the roller fastening protrusion and the fastening line in the covering area.

The frame rail may include a second horizontal part disposed on the roller stage, a first horizontal part that covers the top of the fastening part and a portion of the roller, and a vertical part that is disposed between the first horizontal part and the second horizontal part and supports the first and second horizontal parts.

In the frame rail, the vertical part may be coupled to the fastening part in the coupling area, and the first horizontal part and the second horizontal part may wrap around a portion of the end cap.

The frame rail may include an extended horizontal part formed to extend from both ends of the first horizontal part.

The end cap may include: a ridge part and a groove part that contact the ends of the unit columns; and a coupling groove that couples with the frame rail.

The ridge part and the groove part may be arranged in a zigzag pattern.

### EFFECTS OF THE INVENTION

The effects of the roller-type product display device according to the present disclosure are described as follows.

According to at least one embodiment of the present disclosure, a roller-type goods display device that reduces working time and improves work efficiency through a roller stage composed of a plurality of unit columns may be provided.

According to at least one embodiment of the present disclosure, a roller-type goods display device that may minimize friction between displayed goods and a frame rail may be provided.

Further scope of applicability of the present disclosure will become apparent from the detailed description given hereinafter. However, it should be understood that the detailed description and specific examples, while indicating preferred embodiments of the invention, are given by way of illustration only, since various changes and modifications within the spirit and scope of the disclosure will become apparent to those skilled in the art.

### BRIEF DESCRIPTION OF THE DRAWINGS

FIG. 1 is a perspective view of a roller stage according to an embodiment.
FIG. 2 is an enlarged perspective view of area "A" of FIG. 1.
FIG. 3 is an assembled perspective view of a roller-type product display device according to an embodiment.
FIG. 4 is a cross-sectional view taken along line A-A1 of FIG. 3.
FIG. 5 is a perspective view of a frame rail according to an embodiment.
FIG. 6 is a cross-sectional view of a roller-type product display device according to another embodiment.
FIG. 7 is a cross-sectional view of a roller-type product display device according to yet another embodiment.
FIG. 8 is a perspective view of a frame rail according to another embodiment.
FIG. 9 is a plan view illustrating a rear surface of the roller-type product display device according to an exemplary embodiment.
FIG. 10 is a plan view illustrating a rear surface of a roller-type product display device according to another embodiment.
FIG. 11 is a plan view illustrating a cover member of a roller-type product display device according to an embodiment.
FIG. 12 is a plan view of a roller-type product display device according to another embodiment.

### DETAILED DESCRIPTION OF THE INVENTION

Hereinafter, embodiments will be described in detail with reference to the accompanying drawings, but the same or similar components are given the same reference numerals regardless of the drawing numerals, and a redundant description thereof will be omitted. The suffixes "module" and "part" for components used in the following description are given or used interchangeably in consideration of ease of specification preparation only, and do not have meanings or roles that are distinct from each other. Furthermore, in describing the embodiments disclosed in the present specification, when it is determined that a detailed description of related known technology may obscure the gist of the embodiments disclosed in the present specification, the detailed description will be omitted. In addition, the accompanying drawings are for easy understanding of the embodiments disclosed in the present specification, and the technical spirit disclosed in the present specification is not limited by the accompanying drawings, and it should be understood that the spirit and scope of the disclosure include all modifications, equivalents, and substitutes.

Terms including ordinal numbers such as first, second, etc. may be used to describe various components, but the components are not limited by the terms. The terms are used only for the purpose of distinguishing one component from another.

When a component is recited as being "connected" or "connected" to another component, it should be understood that it may be directly connected or connected to the other component, but another component may exist in between. On the other hand, when a component is recited as being "directly connected" or "directly connected" to another component, it should be understood that no other component exists in between.

A singular expression includes a plural expression unless the context clearly indicates otherwise.

In the present application, it should be understood that terms such as "comprising" or "having" are intended to designate the presence of stated features, numbers, steps, operations, components, parts, or a combination thereof, and do not preclude the possibility of the presence or addition of one or more other features, numbers, steps, operations, components, parts, or a combination thereof.

In the drawings, the sizes of the components may be exaggerated or reduced for convenience of explanation. For example, the size and thickness of each component shown in the drawings are arbitrarily shown for convenience of explanation, and thus an embodiment is not necessarily limited to that shown.

When another embodiment is possible, a specific process sequence may be performed differently from the described order. For example, two processes described in succession may be performed substantially simultaneously, or may proceed in the reverse order of the described order.

In the following embodiments, when a film, region, component, etc. is said to be connected, it includes not only the case where the film, region, components are directly connected, but also the case where other films, regions, or components are interposed and indirectly connected. For example, when a film, region, component, etc. is said to be electrically connected in this specification, it includes not only the case where the film, region, components are directly electrically connected, but also the case where other films, regions, or components are interposed and indirectly electrically connected.

Hereinafter, a detailed description will be given with reference to the drawings.

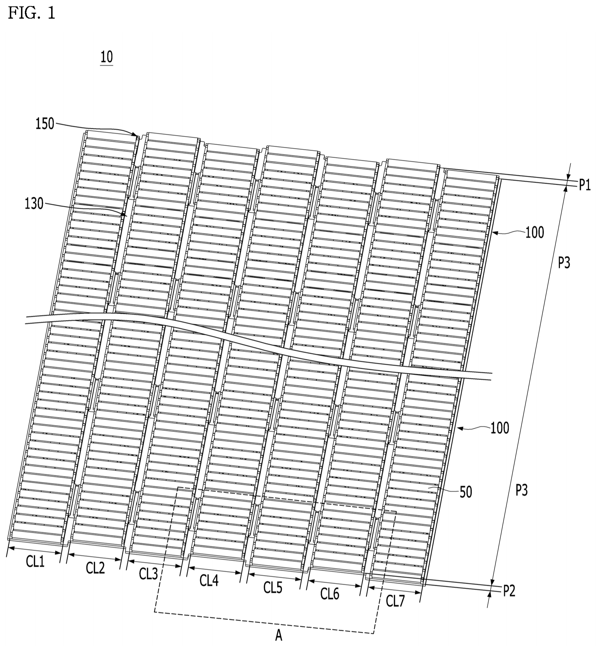

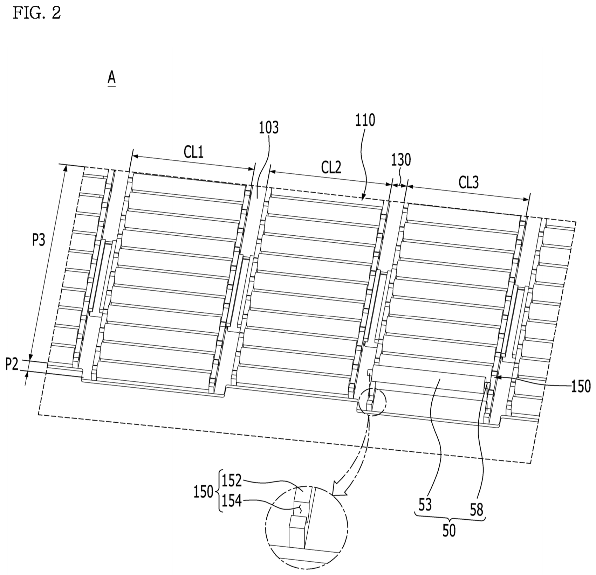

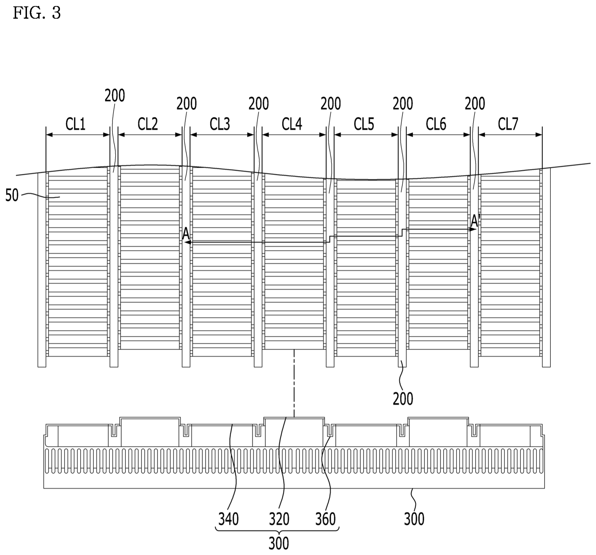

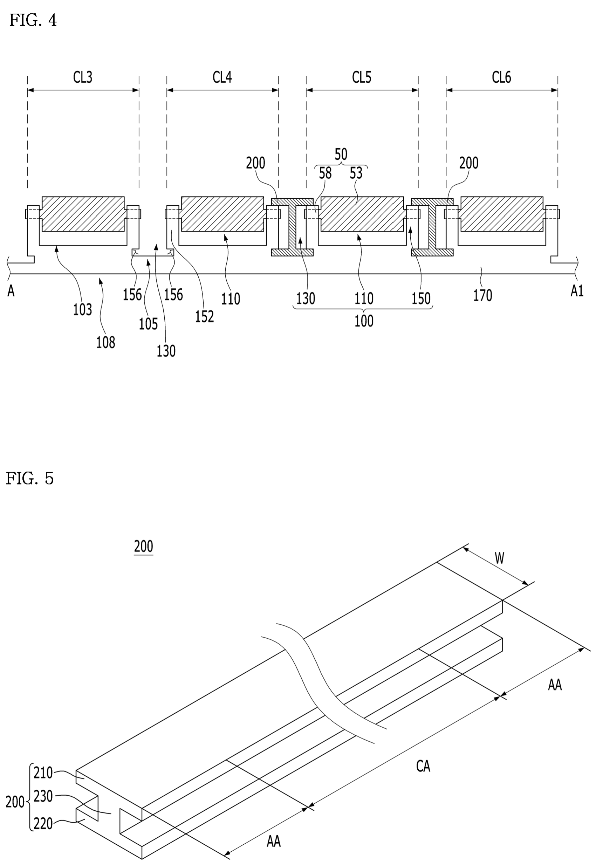

FIG. 1 is a perspective view of a roller stage according to an embodiment, FIG. 2 is an enlarged perspective view of area "A" of FIG. 1, FIG. 3 is an assembled perspective view of a roller-type product display device according to an embodiment, and FIG. 4 is a cross-sectional view taken along line A-A1 of FIG. 3.

Referring to FIGS. 1 to 4, a roller-type goods display device (10) according to an embodiment may seat a goods item and may include rollers (50) capable of moving the goods item.

And, the roller-type goods display device (10) may include a roller stage (100), a frame rail (200), and an end cap (300).

The roller stage (100) may include a roller part (110), a frame part (130), a fastening part (150), and a roller stage body (170).

The roller stage body (170) may include a first surface (103), a second surface (108), and a sliding surface (105).

The first surface (103) is disposed on one side of the roller stage body (170) and may receive the rollers (50). The second surface (108) is disposed on the opposite side of the first surface (103) and may be disposed on the other side of the roller stage body (170).

And, the sliding surface (105) is disposed on a plane parallel to the first surface (103) and may be arranged alternately with the first surface (103). The frame rail (200) may slide on the sliding surface (105).

A plurality of rollers (50) may be disposed on the first surface (103). The plurality of rollers (50) may be arranged in a column shape on the first surface (103). The plurality of rollers (50) may be arranged along the length of the column. A unit column (CL) area (hereinafter referred to as "unit column (CL)") may be formed on the roller stage (100) by the plurality of rollers (50) arranged along the length of the column.

A plurality of unit columns (CL) may be formed on the roller stage (100). The plurality of unit columns (CL) may be arranged in a direction intersecting the length direction of the unit column (CL). On the roller stage (100), the plurality of unit columns (CL) may be disposed integrally through the frame part (130) formed between the unit columns (CL). The unit columns (CL) may be disposed with the same length.

Here, the ends of the unit columns (CL) may be arranged alternately offset. Therefore, the ends of the unit columns (CL) are arranged in a zigzag shape, so that the roller stage (100) may have a zigzag-shaped end.

In the roller stage (100), the roller part (110) may accommodate the roller (50), the frame part (130) may partition the roller part (110), and the fastening part (150) may seat the roller (50) and prevent its dislodgement.

The roller part (110) is disposed on the first surface (103), and the rollers (50) may be disposed on the first surface (103). Therefore, the roller part (110) may be disposed in a column shape to form a unit column (CL) on the roller stage (100).

The roller (50) may include a roller body (53) and a roller fastening protrusion (58). The roller fastening protrusion (58) may be formed in a circular pillar shape. The roller fastening protrusion (58) may be a protrusion that protrudes and extends from an end of the roller body (53).

The roller part (110) may accommodate the roller body (53). And the roller fastening protrusion (58) may be seated in the fastening part (150). Therefore, the roller body (53) is disposed on the first surface (103), and the roller fastening protrusion (58) may be disposed on the upper surface of the fastening part (150).

The fastening part (150) is disposed on the first surface (103) disposed on one side of the roller stage body (170), and may be disposed to protrude from the first surface (103). Therefore, the roller part (110) and the frame part (130) may be disposed in a relatively recessed shape in comparison with the fastening part (150).

Specifically, as illustrated in FIG. 4, the fastening portion 150 may include a fastening line 152 and a fastening groove 154. And the fastening part (150) may further include an insertion groove (156) disposed on the lower side of the fastening line (152).

The fastening line (152) is formed with a set thickness and may be disposed along the major axis (length) direction of the unit column (CL). Since the fastening part (150) may be disposed between the roller part (110) and the frame part (130), the fastening line (152) may also be disposed between the roller part (110) and the frame part (130).

In one embodiment, the roller part (110) may be disposed on one side of the fastening line (152), and the frame part (130) may be disposed on the other side of the fastening line (152) disposed on the opposite side of the one side of the fastening line (152).

In other words, with respect to any one fastening line (152) disposed on the first surface (103), a frame part (130) may be formed in a space where an adjacent fastening line (152) is spaced apart from the reference fastening line (152) by a certain separation distance. And, a roller part (110) may be formed in a space where a fastening line (152) disposed relatively far from the reference fastening line (152) is spaced apart.

This is because the placement area of the roller part (110) should be relatively wider than the frame part (130) that connects the unit columns (CL). That is, it is because the formation area of the roller part (110) that moves the product must be disposed larger.

The fastening part (150) may be disposed between the roller part (110) and the frame part (130).

Since the fastening part (150) is disposed protruding from the first surface (103) of the roller stage (100), one side surface of the fastening line (152) may be disposed adjacent to the roller part (110). Specifically, one side surface of the fastening line (152) may be disposed adjacent to the first surface (103).

And, the other side surface of the fastening line (152), which is disposed on the opposite side of the one side surface of the fastening line (152), may be disposed adjacent to the frame part (130). Specifically, the other side surface of the fastening line (152) may be disposed adjacent to the sliding surface (105). Here, the first surface (103) and the sliding surface (105) may be parallel or disposed on the same plane.

In FIG. 4, it will be described that the first surface (103) and the sliding surface (105) are disposed in parallel. And, in a part of FIG. 4, the frame rail (200) disposed in the frame part (130) is not shown to clearly illustrate the shape of the frame part (130).

Referring to FIG. 4, the sliding surface (105) is formed to be further recessed toward the inside of the roller stage body compared to the first surface. In other words, the separation distance from the second surface (108) to the sliding surface (105) is disposed to be shorter than the separation distance from the second surface (108) to the first surface (103).

The fastening groove (154) may be formed by removing a part of the upper surface of the fastening line (152). For example, the fastening groove (154) may be a rectangular or semicircular groove disposed on the upper surface of the fastening line (152). A roller fastening protrusion (58) may be seated in the fastening groove (154), which is a rectangular or semicircular groove. The roller-type goods display device (10), by disposing the fastening groove (154) on an upper surface of the fastening line (152), may prevent the roller body (53) from contacting the first surface (103) and causing friction.

Meanwhile, the fastening part (150) may further include an insertion groove (156) disposed on the lower side of the fastening line (152).

The insertion groove (156) may be formed on the side surface of the fastening line (152) adjacent to the sliding surface (105). The insertion groove (156) may be disposed to extend inward into the body of the roller stage (170) along a side surface in the longitudinal direction of the sliding surface (105).

When the insertion groove (156) is disposed inside the roller stage body (170), the strength of the fastening line (152) may be maintained. For example, the strength to withstand the load of goods placed on the fastening line (152) and the roller (50) may be maintained.

The frame part (130) is an area where the frame rail (200) is disposed, and the frame parts (130) may be respectively disposed between the roller parts (110).

More specifically, the frame part (130) may be disposed between a fastening part (150) and an adjacent fastening part (150). Therefore, the fastening part (150) may be disposed between the roller part (110) and the frame part (130). In one embodiment, with respect to one roller part 110, fastening lines (152) may be disposed on both sides of the roller part (110). Furthermore, with respect to the frame part (130), fastening lines (152) may be disposed on both sides of the frame part (130). Here, the fastening parts (150) may be fastening parts (150) disposed in areas of different unit columns (CL).

A frame rail (200) may be disposed in the frame part (130). The frame rail (200) may be slidably disposed on the sliding surface (105). The frame rail (200) may cover a part of the upper surface of the fastening part (150). In one embodiment, the frame rail (200) may cover a part of the upper surface of the fastening line (152) of the fastening part (150).

As such, in the roller-type goods display device (10), since the frame part (130) is disposed between a unit column (CL) and an adjacent unit column (CL) so that a plurality of unit columns (CL) are connected, the plurality of unit columns (CL) may be disposed integrally on the roller stage (100).

As illustrated in FIGS. 1 to 3, a unit column (CL) may be defined as an area composed of one roller part (110) and fastening lines (152) disposed on both sides of the adjacent roller part (110).

The roller-type goods display device (10) may include a first area (P1), a second area (P2), and a third area (P3) where a plurality of unit columns (CL) are disposed. The first area (P1) is an area where one end of the unit column (CL) is disposed, and the second area (P2) may be an area where the other end disposed on the opposite side of the one end is disposed. The third area (P3) may be disposed between the first area (P1) and the second area (P2).

Each of the plurality of unit columns (CL) may be formed with the same length. For example, assuming a case where unit columns (CL) are sequentially disposed from one side, a first unit column (CL1), a second unit column (CL2) disposed adjacent to one side of the first unit column (CL1), a third unit column (CL3) disposed adjacent to one side of the second unit column (CL2), and a fourth unit column (CL4) disposed adjacent to one side of the third unit column (CL3), the ends of each of the plurality of unit columns (CL) may be arranged in a zigzag shape. The fifth unit column (CL5) to the seventh unit column (CL7) shown in the drawings may also be formed in the same manner.

As a specific example, since each of the plurality of unit columns (CL) is formed with the same length, when one end of the first unit column (CL1) is disposed in the first area (P1), the other end of the first unit column (CL1) may not be disposed in the second area (P2).

And, since each of the plurality of unit columns (CL) is formed with the same length, when one end of the second unit column (CL2) is disposed in the second area (P2), the other end of the second unit column (CL2) may not be disposed in the first area (P1). And, when one end of the third unit column (CL3) is disposed in the first area (P1) similarly to the first unit column (CL1), the other end of the first unit column (CL1) may not be disposed in the second area (P2).

As such, in the roller-type goods display device (10), since the ends of the unit columns (CL) are arranged in a zigzag pattern, when there are multiple roller stages (100), the multiple roller stages (100) may be easily connected. Furthermore, when the ends of the roller-type goods display device (10) are arranged in a zigzag shape, the coupling force with components connected to the ends of the roller stage (100) may be improved.

As illustrated in FIG. 3, the roller-type goods display device (10) according to an embodiment may include an end cap (300).

The end cap (300) may be disposed at an end of the roller stage (100). Therefore, the end cap (300) may be disposed in the first area (P1) or the second area (P2).

The end cap (300) may include a ridge part (320) and a groove part (340). Here, the ridge part (320) may be defined as an area disposed to be relatively protruded compared to the groove part (340). For example, when an end of a unit column (CL) is disposed in the first area (P1), the groove part (340) of the end cap (300) may be disposed in the first area (P1).

In other words, in the end cap (300), a ridge part (320) and a groove part (340) may be arranged to follow the shape of the unit columns (CL) whose ends are arranged in a zigzag pattern.

Furthermore, the end cap (300) may include a coupling groove (360) in an area corresponding to the end of the frame part (130). The coupling groove (360) may be coupled to the frame rail (200) disposed in the frame part (130).

*103 As such, a roller-type goods display device (10) according to an embodiment may form a roller stage (100) having a plurality of unit columns (CL), and a frame part (130) may be disposed between the plurality of unit columns (CL).

Therefore, since the frame rail (200) is coupled to the frame part (130) disposed on the roller stage (100) having the plurality of unit columns (CL), it is not necessary to align the frame rail (200) every time, thereby reducing the working time to form the roller-type goods display device (10) and improving work efficiency.

Furthermore, since a roller-type goods display device (10) according to an embodiment forms the roller stage (100) in units of unit columns (CL), it may prevent shape distortion such as bending or sagging of the roller-type goods display device (10).

FIG. 5 is a perspective view of a frame rail according to an embodiment.

FIG. 5 will be described with reference to FIGS. 1 to 4 for ease of explanation and to avoid redundant description.

The roller-type goods display device (10) according to an embodiment may include a frame rail (200) disposed in the frame part (130).

The frame rail (200) may be disposed in the first area (P1), the second area (P2), and the third area (P3).

The frame rail (200) may include a coupling area (AA) disposed in the first area (P1) or the second area (P2). And the frame rail (200) may include a covering area (CA) disposed in the third area (P3).

In one embodiment, the frame rail (200) may be formed in an H-beam shape. More specifically, the frame rail (200) may include a first horizontal part (210) that contacts and covers the upper surface of the fastening line (152). And, the frame rail (200) may include a second horizontal part (220) that slides on the sliding surface (105). And, it may include a vertical part (230) that is disposed between the first horizontal part (210) and the second horizontal part (220) and supports the first horizontal part (210) and the second horizontal part (220).

Here, the second horizontal part (220) and the first horizontal part (210) may be formed with the same length. Furthermore, the length of the second horizontal part (220) and the first horizontal part (210) may be formed to be similar to the formation length of the sliding surface (105).

In other words, in order for both ends of the second horizontal part (220) to be coupled to the insertion groove (156), the second horizontal part (220) may be formed to have a length similar to the formation length of the sliding surface (105). And, the first horizontal part (210) may be formed to have a length similar to the formation length of the sliding surface (105) in order to cover the roller fastening protrusion (58).

Both ends of the second horizontal part (220) may be coupled to the insertion groove (156). Since both ends of the second horizontal part (220) are coupled through the roller stage body (170) disposed at the lower part of the fastening line (152), the frame rail (200) may be prevented from being detached from the frame portion 130.

The vertical part (230) may be coupled to a coupling groove (360) formed in the end cap (300) in the coupling area (AA), which is the first area (P1) or the second area (P2). And the vertical part (230) may form a physical force that may support the first horizontal part (210) and the second horizontal part (220) in the covering area (CA), which is the third area (P3).

The first horizontal part (210) may cover the upper surface of the fastening line (152) and the roller fastening protrusion (58) disposed in the covering area (CA), which is the third area (P3). That is, the first horizontal part (210) disposed in the covering area (CA) covers the roller fastening protrusion (58), thus preventing the roller (50) from being detached from the roller part (110).

The first horizontal part (210) and the second horizontal part (220) may be disposed to wrap around a part of the end cap (300) in the coupling area (AA), which is the first area (P1) or the second area (P2). For example, in the coupling area (AA), since a part of the first horizontal part (210) and the second horizontal part (220) is coupled to the body of the end cap (300), it may provide a physical force that prevents the end cap (300) from being detached from the roller stage (100). Furthermore, the first horizontal part (210) and the second horizontal part (220) are coupled to the end cap (300) and may prevent the shape of the roller-type goods display device (10) from being distorted.

The formation width (W) of the first horizontal part (210) may be formed in various sizes. The formation width (W) of the first horizontal part (210) may be formed within a limit that may prevent the detachment of the roller (50). And, the formation width (W) of the first horizontal part (210) may be formed within a limit that does not increase friction with the goods placed on the roller (50). In other words, the formation width (W) of the first horizontal part (210) may be formed within a range that allows easy movement of the goods placed on the roller (50).

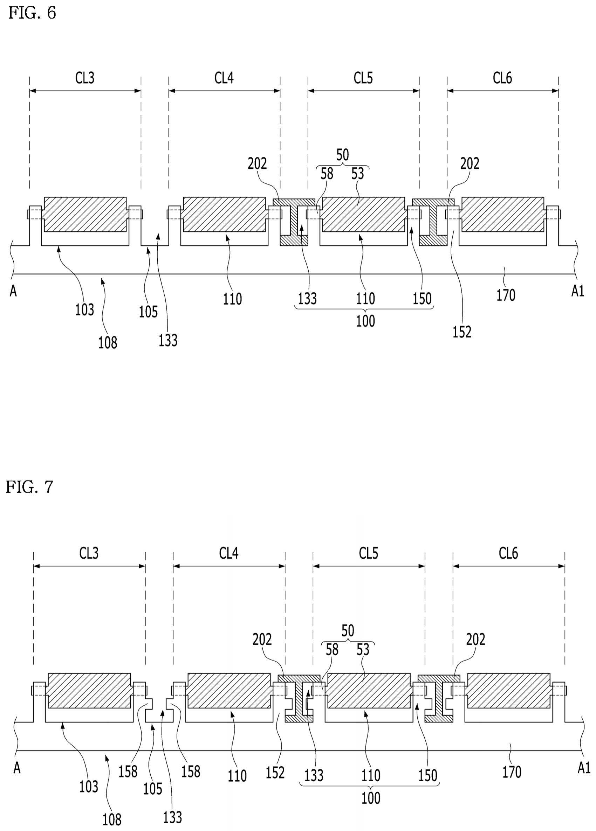

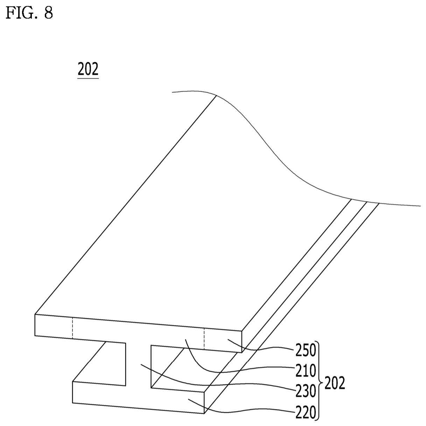

FIG. 6 is a cross-sectional view of a roller-type goods display device according to another embodiment, FIG. 7 is a cross-sectional view of a roller-type goods display device according to yet another embodiment, and FIG. 8 is a perspective view of a frame rail according to another embodiment.

FIGS. 6 to 8 will be described with reference to FIGS. 1 to 5 for ease of explanation and to avoid redundant description.

Referring to FIG. 6, the frame part (133) may be formed to have the same width as the formation width of the sliding surface (105). And, the sliding surface (105) may be disposed on the same plane as the first surface (103).

As such, in a roller-type goods display device according to another embodiment, the sliding surface (105) may be disposed on the same plane as the first surface (103), and the sliding surface (105) may be disposed to be the same as the formation width of the frame part (133). Therefore, a roller-type goods display device according to another embodiment may easily form the roller stage (100).

Meanwhile, in the roller-type goods display device according to another embodiment, the shape of the frame rail (see 202 of FIG. 8) disposed on the frame part (133) may also be changed according to the shape of the frame part (133). The second horizontal part (220) of the frame rail (202) may be coupled in an interference fit manner with the lower end of the frame part (133). The description of the frame rail (202) will be described later in FIG. 8.

Referring to FIG. 7, it may further include a protrusion (158) protruding from the side surface of the fastening line (152) in the shape of the roller-type goods display device shown in FIG. 6.

The protrusion (158) may be a projection protruding from the side surface of the fastening line (152) toward the frame part (133).

The protrusion (158) may be spaced apart from the sliding surface (105) considering the formation thickness of the second horizontal part (220), but may be disposed adjacent to the sliding surface (105).

Therefore, an insertion groove (156) may be formed between the sliding surface (105) and the protrusion (158).

Referring to FIG. 8, a frame rail (202) may be disposed on the frame part (133).

The formation widths of the first horizontal part (210) and the second horizontal part (220) of the frame rail (202) may be disposed differently. Here, the second horizontal part (220) may be formed with a width corresponding to the width of the frame part (130).

The first horizontal part (210) may be disposed in a shape with an extended formation width compared to the second horizontal part (220). Specifically, an extended horizontal part (250) formed extending from both ends of the first horizontal part (210) may be disposed.

The extended horizontal part (250) may easily cover the upper surface of the fastening line (152) and the roller fastening protrusion (58).

Therefore, a roller-type goods display device (10) according to an embodiment, by disposing the extended horizontal part (250) to extend from the first horizontal part (210), may reduce the formation width of the frame part (133) and freely form the thickness of the fastening line (152). For example, when the roller fastening protrusion (58) seated in the fastening groove (154) is frequently detached, the thickness of the fastening line (152) may be reset to minimize the defect of the roller fastening protrusion (58) being detached from the fastening groove (154).

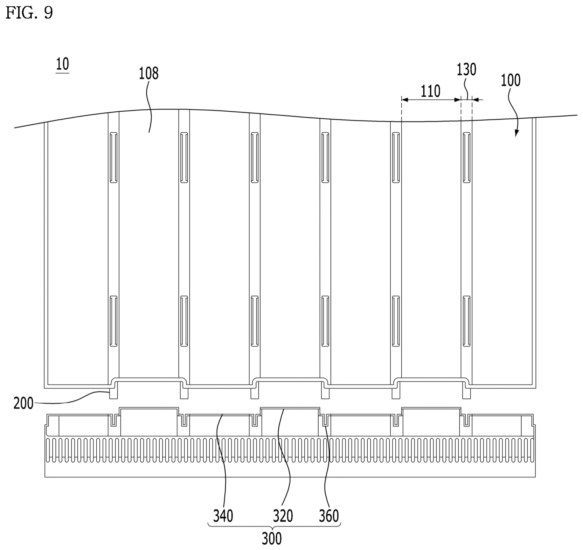

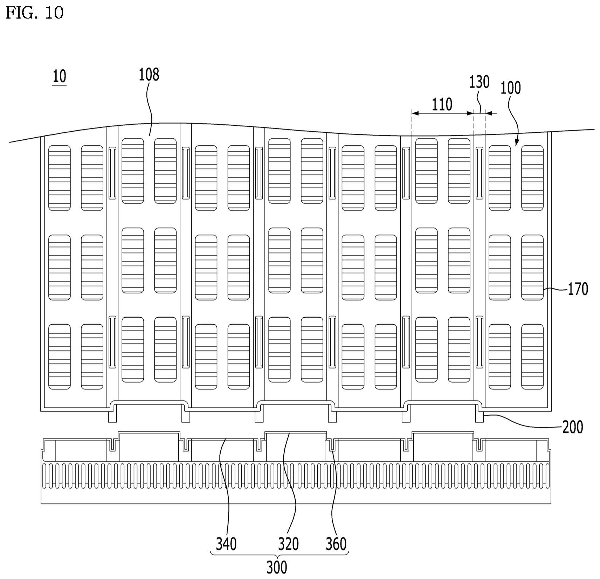

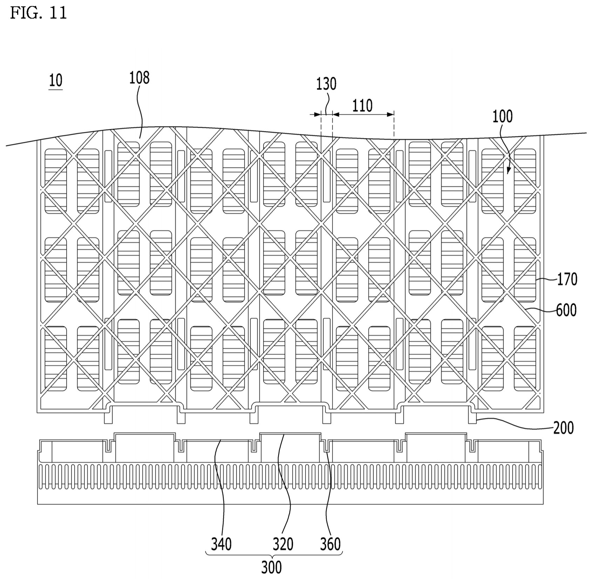

FIG. 9 is a plan view illustrating a rear surface of the roller-type goods display device according to an exemplary embodiment, FIG. 10 is a plan view illustrating a rear surface of a roller-type goods display device according to another embodiment, and FIG. 11 is a plan view illustrating a cover member of a roller-type goods display device according to an embodiment.

Here, FIGS. 9 to 11 will be described with reference to FIGS. 1 to 8 for ease of explanation and to avoid redundant description.

Referring to FIGS. 9 and 10, the roller-type goods display device (10) may have the second surface (108) of the roller stage (100) arranged in a flat shape. It may be preferable for the second surface (108) of the roller stage (100) to be formed in a flat shape so that the roller-type goods display device (10) may be seated on the ground or a display stand. Alternatively, when the ground or display stand is not flat, a flexible material that may cope with the curves may be used.

And, the roller stage (100) may further include a groove through which liquid or gas may pass in the area where the frame part (130) is formed.

And referring to FIG. 10, the roller stage (100) may include a through-hole (180) in the roller part (110). The through-hole (180) is a hole that penetrates the first surface (103) and the second surface (108), and may discharge gas or liquid to the outside of the roller stage (100). For example, when a product containing liquid is placed on the roller-type goods display device (10), some of the liquid may flow onto the roller stage (100) due to the rotation of the roller (50). The aforementioned liquid may be a factor that lowers the display quality of the product, so the quality of the product may be enhanced by discharging the liquid from the roller stage (100).

Meanwhile, referring to FIG. 11, the roller-type goods display device (10) may further include a cover member (600) disposed on the second surface (108) of the roller stage (100).

The cover member (600) is disposed on the second surface (108) and may protect the roller stage (100). Furthermore, when there are multiple roller stages (100), the cover member (600) may prevent any one roller stage (100) from being detached from the roller-type goods display device (10).

The cover member (600) may be formed in a comb shape. The comb-shaped body may have holes formed between the body parts. The holes may serve as passages for the aforementioned gas or liquid. In FIG. 7, the cover member (600) is shown to be formed in a comb shape, but the shape of the cover member (600) may be formed in various shapes such as circular, square, triangular, etc., as well as the comb shape.

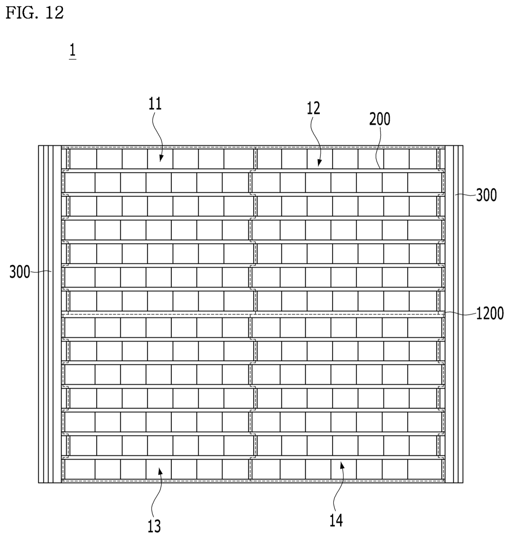

FIG. 12 is a plan view of a roller-type goods display device according to another embodiment.

FIG. 12 will be described with reference to FIGS. 1 to 11 for ease of explanation and to avoid redundant description.

Referring to FIG. 12, the roller-type goods display device (1) according to an embodiment may have a plurality of roller stages (11, 12, 13, 14) disposed. The roller stages (11, 12, 13, 14) may each be equipped with a roller part (110), a frame part (130), and a fastening part (150) as described above. And, a frame rail (200) may be disposed on the frame part (130).

Therefore, the first roller stage (11), the second roller stage (12), the third roller stage (13), and the fourth roller stage (14) may be semi-finished roller-type goods display devices.

In the area where the first roller stage (11) and the second roller stage (12) are adjacent, the zigzag-shaped ends may be disposed to be in contact with each other. And the third roller stage (13) and the fourth roller stage (14) may also be arranged in the same way.

Meanwhile, a first frame rail (1200) may be disposed in the area where the first roller stage (11) and the third roller stage (13) are connected, and in the area where the second roller stage (12) and the fourth roller stage (14) are connected.

The first frame rail (1200) may be disposed on one side of each of the first roller stage (11) and the third roller stage (13) to connect the first roller stage (11) and the third roller stage (13). The second roller stage (12) and the fourth roller stage (14) may be connected in the same way.

Although FIG. 12 shows the first frame rail (1200) disposed as an integrated unit, they may be disposed respectively in the area where the first roller stage (11) and the third roller stage (13) are connected, and on the second roller stage (12) and the fourth roller stage (14).

And, an end cap (300) may be disposed at the exposed ends on the outer side of the first roller stage (11) and the third roller stage (13). And an end cap (300) may be disposed in the same way on the second roller stage (12) and the fourth roller stage (14). In other words, the end cap (300) may be disposed as an integrated unit to connect the first roller stage (11) and the third roller stage (13) simultaneously. And it may be disposed in the same way on the second roller stage (12) and the fourth roller stage (14).

Therefore, a roller-type goods display device (1) according to an embodiment may be formed with a large area. That is, the roller-type goods display device (1) may have a large area and be formed in a free shape through the end cap (300) and the first frame rail (1200).

Any embodiment or other embodiments described above are not mutually exclusive or distinct. The respective configurations or functions of any embodiments or other embodiments described above may be used in combination or combined.

It will be apparent to those skilled in the art that the disclosure may be embodied in other specific forms without departing from the spirit and essential characteristics of the disclosure. The above detailed description should not be construed as limiting in any respect and should be considered as illustrative. The scope of the invention should be determined by a reasonable interpretation of the appended claims, and all modifications within the equivalent scope of the invention are included in the scope of the invention.

### [DESCRIPTION OF THE REFERENCE NUMERALS]

| | | | |
|---|---|---|---|
| 10: | Roller-type goods display device | 50: | Roller |
| 53: | Roller body | 58: | Roller fastening protrusion |
| 100: | Roller stage | 103: | First surface |
| 105: | Sliding surface | 108: | Second surface |
| 110: | Roller part | 130, 133: | Frame part |
| 150: | Fastening part | 152: | Fastening line |
| 154: | Fastening groove | 156: | Insertion groove |
| 158: | Protrusion | 170: | Roller stage body |
| 180: | Second through-hole | 190: | First through-hole |
| 200: | Frame rail | 202: | Frame rail |
| 210: | First horizontal part | 220: | Second horizontal part |
| 230: | Vertical part | 250: | Extended horizontal part |
| 300: | End cap | 340: | Groove part |
| 320: | Ridge part | 360: | Coupling groove |
| 600: | Cover member | CL: | Unit column |
| P1: | First area | P2: | Second area |
| P3: | Third area | AA: | Coupling area |
| CA: | Covering area | | |

## Claims

1. A roller-type goods display device, comprising:
a roller stage on which a plurality of unit columns are disposed; and
a frame rail disposed between the unit columns;
wherein the roller stage comprises:
a roller stage body;
a roller part in which a plurality of rollers are disposed on a first surface formed on one side of the roller stage body;
a frame part disposed between the roller parts and formed on a sliding surface that is arranged parallel to and alternating with the first surface; and
a fastening part disposed between the roller part and the frame part;
wherein the frame rail is disposed in each of the frame parts, and
the frame rail comprises:
a covering area that covers the fastening part.

2. The roller-type goods display device of claim 1, further comprising an end cap disposed at the ends of the roller stage and the frame rail,
wherein the frame rail comprises:
a coupling area that is coupled to the end cap.

3. The roller-type goods display device of claim 1, wherein, in the roller stage, the ends of the unit columns are arranged in a zigzag pattern.

4. The roller-type goods display device of claim 1, wherein the sliding surface and the first surface are disposed on the same plane.

5. The roller-type goods display device of claim 1, wherein the roller stage further comprises a second surface, which is formed on the opposite side of the first surface and the sliding surface, and is disposed on the other side of the roller stage body, and comprises a through-hole that passes through the first surface, the second surface, and a part of the roller stage body.

6. The roller-type goods display device of claim 5, wherein the through-hole comprises:
a first through-hole disposed in the frame part; and
a second through-hole disposed in the roller part.

7. The roller-type goods display device of claim 5, wherein a cover member is further disposed on the second surface, and
the cover member covers one or a plurality of the roller stages.

8. The roller-type goods display device of claim 5, wherein a separation distance from the second surface to the sliding surface is disposed to be shorter than a separation distance from the second surface to the first surface.

9. The roller-type goods display device of claim 1, wherein the fastening part comprises:
a fastening line disposed along a major axis direction of the unit column; and
a fastening groove disposed on a part of an upper surface of the fastening line.

10. The roller-type goods display device of claim 9, wherein the fastening line comprises:
one side disposed adjacent to the first surface, and the other side disposed adjacent to the sliding surface.

11. The roller-type goods display device of claim 9, further comprising an insertion groove disposed on a lower side of the fastening line.

12. The roller-type goods display device of claim 11, wherein the insertion groove is disposed on a side surface of the fastening line adjacent to the frame part, and is disposed to extend inward into a body of the roller stage along a side surface in a longitudinal direction of the sliding surface.

13. The roller-type goods display device of claim 11, wherein the fastening part further comprises a protrusion projecting from a side surface of the fastening line, and
the insertion groove is formed by the sliding surface, a part of the side surface of the fastening line, and the protrusion.

14. The roller-type goods display device of claim 9, wherein the roller comprises:
a roller body; and
a roller fastening protrusion protruding and extending from an end of the roller body,
wherein the roller fastening protrusion is seated in the fastening groove.

15. The roller-type goods display device of claim 14, wherein the frame rail covers an upper part of the roller fastening protrusion and the fastening line in the covering area.

16. The roller-type goods display device of claim 2, wherein the frame rail comprises:
a second horizontal part disposed on the roller stage;
a first horizontal part that covers an upper part of the fastening part and a portion of the roller; and
a vertical part disposed between the first horizontal part and the second horizontal part, and supporting the first horizontal part and the second horizontal part.

17. The roller-type goods display device of claim 16, wherein, in the frame rail, the vertical part is coupled to the fastening part in the coupling area, and the first horizontal part and the second horizontal part wrap around a part of the end cap.

18. The roller-type goods display device of claim 16, wherein the frame rail comprises an extended horizontal part formed to extend from both ends of the first horizontal part.

19. The roller-type goods display device of claim 2, wherein the end cap comprises:
a ridge part and a groove part that contact ends of the unit columns; and
a coupling groove that is coupled with the frame rail.

20. The roller-type goods display device of claim 19, wherein the ridge part and the groove part are arranged in a zigzag pattern.
